# FASCICULE DE BREVET EUROPEEN

(11) **EP 0 501 866 B1**
(45) Date de publication et mention de la délivrance du brevet: **31.05.1995**
(21) Numéro de dépôt: 92400470.8
(22) Date de dépôt: 24.02.1992
(51) Int. Cl.: B23Q 3/18, G21C 13/06

(54) **Broche d'alignement de deux éléments et dispositif de centrage d'un couvercle sur une cuve mettant en oeuvre ce type de broches**
Ausrichtstange und Zentriervorrichtung für Behälterdeckel, wobei derartige Stangen Verwendung finden
Alignment pin and centering device for covering cap of a vessel using this kind of pin

(30) Priorité: 28.02.1991 FR 9102417
(43) Date de publication de la demande: 02.09.1992
(73) Titulaire: FRAMATOME, 92400 Courbevoie (FR)
(72) Inventeur: Fichot, Philippe, F-71390 St Desert (FR); Roinjard, Jean-Pierre, F-71150 Fontaines (FR)
(74) Mandataire: Lanceplaine, Jean-Claude

(56) Documents cités:
- DE-A- 1 500 807
- DE-A- 2 139 437
- DE-A- 3 816 523

## Description

La présente invention a pour objet une broche d'alignement de deux éléments comportant chacun au moins un orifice destinés à être positionnés coaxialement l'un par rapport à l'autre.

La présente invention a également pour objet un dispositif de centrage d'un couvercle sur une cuve, notamment d'un réacteur nucléaire, mettant en oeuvre ce type de broches.

Dans de nombreuses applications industrielles, on utilise couramment des organes de positionnement par exemple pour centrer un élément par rapport à un autre et des organes de liaison pour fixer ces deux éléments entre eux.

C'est notamment le cas pour des enceintes utilisées dans l'industrie, notamment nucléaire, comme par exemple les cuves de réacteur nucléaire ou des générateurs de vapeur, ou encore dans l'industrie chimique, pétrochimique où un couvercle est fixé de manière amovible sur une cuve afin de pouvoir intervenir périodiquement dans ladite cuve.

A cet effet, le couvercle est fixé sur la cuve par des goujons qui sont vissés dans des taraudages prévus en partie haute de ladite cuve et qui pénètrent dans des alésages débouchants prévus dans la bride du couvercle et correspondant auxdits taraudages.

Ces goujons sont généralement employés en assez grand nombre et relativement rapprochés les uns des autres, si bien que le démontage et le remontage du couvercle nécessitent le dévissage et le vissage de tous ces goujons.

Ces opérations et notamment le vissage des goujons est une opération aléatoire et délicate qui impose des précautions particulières de mise en oeuvre.

En effet, compte tenu de la taille et des dimensions importantes des éléments, il arrive fréquemment que la coaxiabilité des orifices des deux éléments destinés à être assemblés ne soit pas respectée au moment du vissage des goujons.

Ces défauts d'alignement peuvent provoquer des coincements au cours du vissage des goujons entraînant des contraintes irrégulièrement réparties sur les pièces en mouvement et de ce fait une usure irrégulière et prématurée.

On connaît dans le brevet DE-A-3 816 523 une broche d'alignement de deux éléments comportant chacun au moins un orifice destiné à être positionné coaxialement l'un par rapport à l'autre. Cette broche comprend des cages de diamètres respectifs inférieurs aux diamètres des orifices des deux éléments, destinées à être placées dans ces orifices, et comporte des moyens d'expansion radiale pour le centrage de la broche dans l'orifice de l'un des éléments constituant une référence et pour le déplacement du second élément par rapport au premier.

On connaît également dans le brevet DE-A-1 500 807 un dispositif de maintien d'une broche dans un orifice. Cette broche comporte une tige munie à une extrémité d'un organe de manoeuvre et à l'extrémité opposée d'une partie filetée sur laquelle est vissé un écrou. Sur cette tige est montée une pièce comportant une double conicité opposée et destinée à coopérer avec deux manchons indépendants de blocage de la broche dans ledit orifice.

La présente invention a pour but de s'affranchir de ces inconvénients et de proposer une broche qui permet de rechercher la position coaxiale optimale des orifices destinés à l'assemblage des deux éléments, comme par example, les orifices d'un couvercle et d'une cuve d'un réacteur nucléaire.

La présente invention a pour objet une broche d'alignement de deux éléments comportant chacun au moins un orifice destiné à être positionné coaxialement l'un par rapport à l'autre, le premier élément étant fixe et le second élément étant déplaçable radialement, caractérisé en ce qu'elle comprend une cage de diamètre inférieur au diamètre des orifices des deux éléments et destinée à être placée dans ces orifices et en ce que la cage comporte des moyens d'expansion radiale pour le centrage de la broche dans l'orifice du premier élément fixe constituant une référence et pour le déplacement du second élément par rapport au premier élément, lesdits moyens d'expansion radialement sont formés par au moins deux patins répartis symétriquement autour de l'axe de la cage et logés chacun dans une ouverture correspondante longitudinale ménagée dans cette cage, ces patins étant déplaçables radialement simultanément par un organe de commande disposé dans ladite cage.

Selon d'autres caractéristiques de l'invention :
- la cage a une forme générale cylindrique,
- chaque ouverture comporte une partie centrale en forme de "U" et à chacune de ses extrémités un chambrage à fond plat,
- chaque patin comporte, sur sa face extérieure et du haut vers le bas, deux touches en saillie distantes l'une de l'autre et destinées à coopérer avec l'orifice du second élément déplaçable et un appendice muni d'une face d'appui sur le premier élément fixe, perpendiculaire à l'axe de ladite broche,
- chaque patin comporte, sur sa face extérieure et à son extrémité inférieure, une touche en saillie destinée à coopérer avec l'orifice du premier élément fixe,
- les touches possèdent un profil extérieur courbe s'inscrivant dans un cercle,
- chaque patin comporte, sur sa face intérieure et à chaque extrémité, une rampe inclinée de même valeur en sens contraire l'une par rapport à l'autre,
- l'organe de commande comprend, d'une part, une vis de manoeuvre axiale, libre uniquement en rotation, comportant une partie centrale de guidage en rotation et de maintien en translation dans la cage et deux extrémités filetées dont les pas sont de même valeur mais contraires et, d'autre part, deux écrous montés chacun sur l'extrémité filetée correspondante de la vis et destinés à déplacer radialement les patins au cours de la translation desdits écrous par rotation de la vis de manoeuvre,
- les filetages des écrous sont à pas de même valeur mais contraires,
- chaque écrou comporte, à sa périphérie, au moins deux surfaces planes inclinées de même valeur et destinées à coopérer chacune avec la rampe inclinée du patin correspondant,
- les patins sont retenus par au moins un ressort de rappel maintenant lesdits patins au contact des écrous,
- la cage comporte, à son extrémité inférieure, une bague expansive destinée à coopérer avec l'orifice dudit premier élément fixe et déplaçable radialement par un mécanisme indépendant de l'organe de comande,
- le mécanisme de déplacement de la bague expansive est formé par une rampe conique ménagée à la partie inférieure d'une chemise entourant la cage de la broche et déplaçable longitudinalement parallèlement à l'axe de ladite broche,
- la chemise comporte des ouvertures pour le passage des touches des patins, lesdites touches s'opposant à la rotation de ladite chemise.

La présente invention a également pour objet un dispositif de centrage d'un couvercle sur une cuve notamment d'un réacteur nucléaire, comportant chacun des orifices destinés à être positionnés coaxialement les uns par rapport aux autres, caractérisé en ce qu'il comprend au moins deux broches d'alignement telles que décrites ci-dessus.

L'invention sera mieux comprise à l'aide de la description qui va suivre, donnée uniquement à titre d'exemple et faite en se référant aux dessins annexés, sur lesquels :
- la Fig. 1 est une vue schématique en plan du couvercle d'une cuve d'un réacteur nucléaire comportant les broches d'alignement selon l'invention,
- la Fig. 2 est une vue de dessus de la Fig. 1,
- la Fig. 3 est une vue en coupe longitudinale d'un premier mode de réalisation d'une broche d'alignement selon l'invention, les moyens d'expansion de la broche étant en position rétractée,
- la Fig. 4 est une vue en coupe selon la ligne 4-4 de la Fig. 3,
- la Fig. 5 est une vue analogue à la Fig. 3 avec les moyens d'expansion sortis pour le centrage du couvercle sur la cuve,
- la Fig. 6 est une vue en coupe longitudinale d'un second mode de réalisation d'une broche d'alignement selon l'invention,
- la Fig. 7 est une vue en coupe selon la ligne 7-7 de la Fig. 6.

Dans ce qui suit, l'invention sera décrite pour le positionnement d'un couvercle sur une cuve par exemple d'un réacteur nucléaire, au moyen d'un dispositif de centrage mettant en oeuvre des broches d'alignement selon l'invention.

De telles broches d'alignement peuvent bien évidemment être utilisées dans d'autres applications industrielles et d'une manière générale pour le centrage de deux éléments comportant chacun au moins un orifice destiné à être positionné coaxialement l'un par rapport à l'autre.

La cuve 1 comporte en partie haute, un ensemble de taraudages 2 répartis symétriquement sur une circonférence concentrique par rapport à l'axe principale de ladite cuve et destinés à recevoir chacun l'extrémité filetée d'un organe de liaison non représenté.

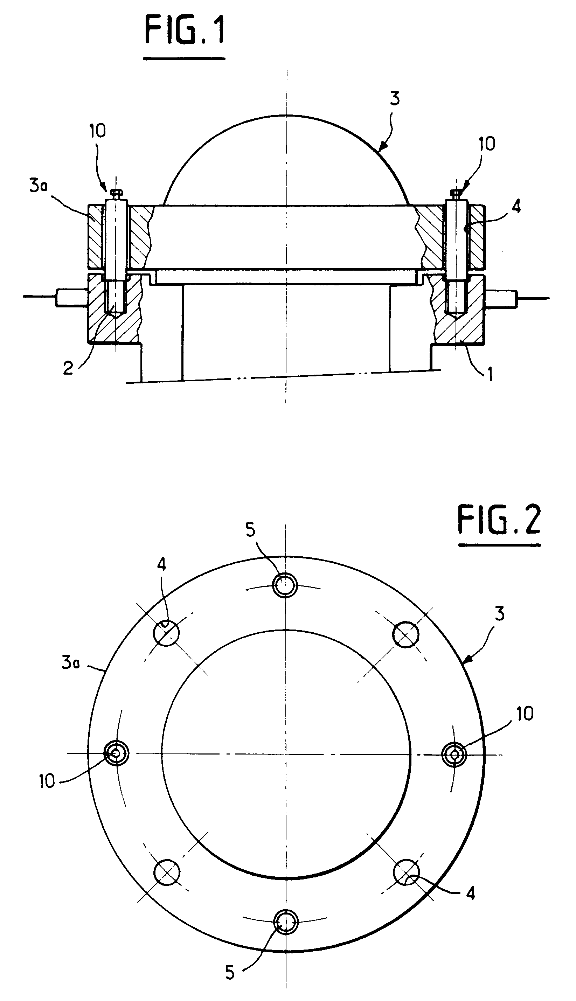

D'autre part, le couvercle 3 est pourvu d'une bride périphérique 3a, percée d'alésages débouchants 4 correspondant aux taraudages 2 de la cuve 1 et répartis symétriquement sur une circonférence concentrique par rapport à l'axe principal dudit couvercle (Fig. 2). Chaque alésage débouchant 4 permet le passage d'un organe de liaison.

A la fermeture de la cuve 1, le couvercle 3 est posé sur cette cuve 1 à l'aide d'un pont polaire et par l'intermédiaire d'un appareil de manutention, non représentés.

Le prépositionnement du couvercle 3 à la verticale de la cuve 1 est facilité par la mise en place de deux tiges de guidage non expansives 5 (Fig. 2) prenant la place de deux organes de liaison diamétralement opposés et passant à travers les deux alésages 4 correspondant du couvercle 3.

Ces tiges de guidage 5 ont un diamètre inférieur au diamètre des alésages 4 et ménagent donc un jeu avec ces alésages.

Les jeux fonctionnels existant entre le couvercle 3 et la cuve 1 font qu'il subsiste un désalignement jugé trop important dudit couvercle 3 par rapport à ladite cuve 1, tout particulièrement lors de l'opération de vissage des organes de liaison dans les taraudages 2 de la cuve 1.

De façon à pouvoir remédier à cet état de fait, on utilise en complément desdites tiges de guidage, un dispositif selon l'invention pour permettre de rechercher la position optimale du couvercle 3 par rapport à la cuve 1.

Ainsi, on rajoute, en lieu et place de deux organes de liaison, deux broches d'alignement 10, suivant l'invention, situées à 90° par rapport auxdites tiges de guidage 5.

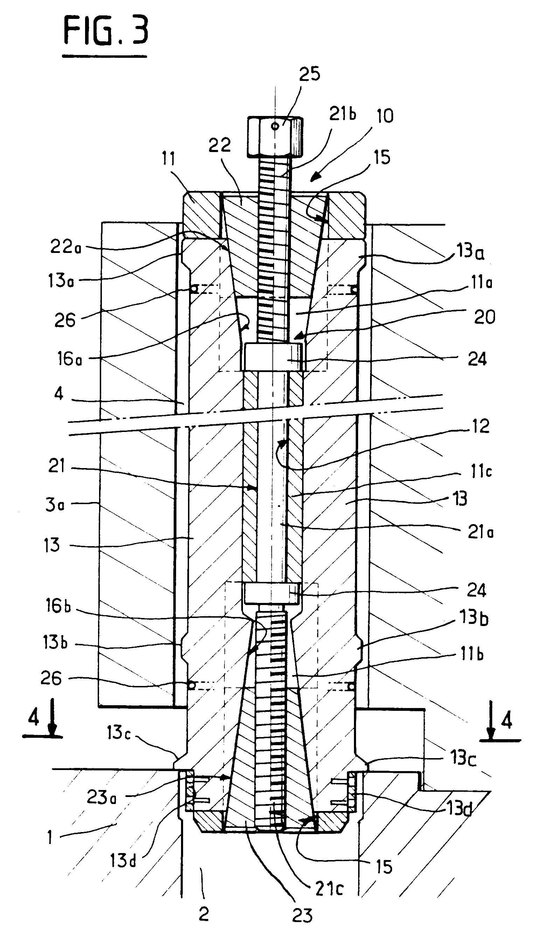

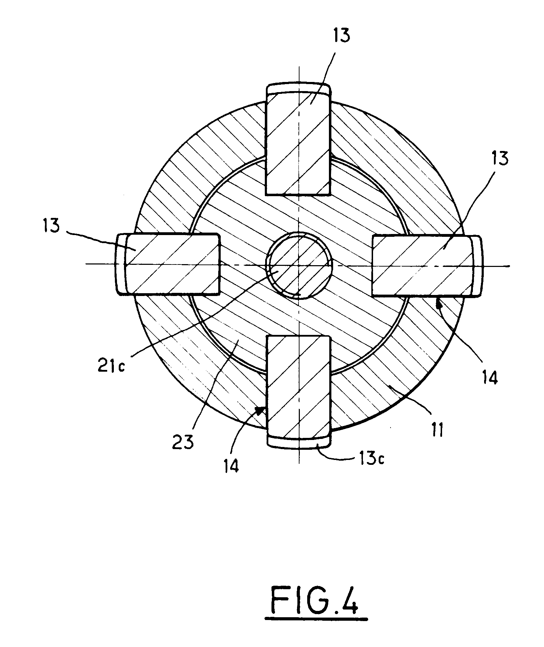

En se reportant maintenant aux Figs 3 et 4, on va décrire plus en détails une broche d'alignement 10.

La broche d'alignement 10 comprend une cage 11 de forme générale cylindrique et de diamètre inférieur au diamètre des alésages 4 du couvercle 3 et des taraudages 2 de la cuve 1.

Cette cage 11 comporte, à chacune de ses extrémités et sur une partie de sa hauteur, un chambrage cylindrique, respectivement 11a et 11b, et une partie centrale pleine 11c perçée d'un alésage 12 dans l'axe de ladite broche 10.

La broche 10 est pourvue de moyens d'expansion radialement pour le centrage de cette broche dans le taraudage 2 de la cuve 1 fixe, constituant une référence, et pour le déplacement radial du couvercle 3 par rapport à la cuve 1.

Ces moyens d'expansion sont formés, dans l'exemple représenté, par quatre patins 13 répartis symétriquement autour de l'axe de la cage 11 et s'étendant sur une partie de la hauteur de ladite cage 11.

Chaque patin 13 est logé dans une ouverture 14 longitudinale ménagée dans ladite cage 11 et comportant une partie centrale en forme de "U" et à chacune de ses extrémités un chambrage 15 à fond plat.

Chaque patin 13 comporte, sur sa face extérieure et du haut vers le bas, deux touches en saillie respectivement 13a et 13b, distantes l'une de l'autre et destinées à coopérer avec l'alésage 4 du couvercle 3, un appendice 13c muni d'une face d'appui perpendiculaire à l'axe de la broche et destinée à venir en contact avec la surface supérieure de la cuve 1 et à son extrémité inférieure, une touche 13d en saillie destinée à coopérer avec le taraudage 2 de ladite cuve 1.

Les touches 13a, 13b et 13d possèdent un profil extérieur par exemple courbe s'inscrivant dans un cercle.

Toutes les touches peuvent être rapportées et fixées à l'aide de moyens classiques au patin 13.

D'autre part, chaque patin 13 comporte, sur sa face intérieure et à chaque extrémité, une rampe inclinée, respectivement 16a et 16b, de même valeur et en sens contraire l'une par rapport à l'autre.

Les patins 13 sont déplaçables radialement simultanément par un organe de commande désigné dans son ensemble par la référence 20 et disposé dans la cage 11.

Cet organe de commande 20 comprend, d'une part, une vis de manoeuvre 21 axiale libre uniquement en rotation et, d'autre part, deux écrous respectivement 22 et 23.

La vis de manoeuvre 21 est composée de trois parties assurant des fonctions distinctes, une partie centrale 21a traversant l'alésage 12 de la partie pleine 11c de la cage 11 et maintenue de chaque côté par une butée 24 qui assure le guidage en rotation et le maintien en translation de ladite vis, et deux parties respectivement 21b et 21c, situées aux extrémités, qui comportent chacune un filetage dont les pas sont de même valeur mais contraires.

Les filetages des écrous 22 et 23 sont également à pas de même valeur mais contraires.

L'écrou 22 est vissé sur l'extrémité filetée 21b et l'écrou 23 est vissé sur l'extrémité filetée 21c de la vis de manoeuvre 21.

L'écrou 22 comporte, à sa périphérie, quatre surfaces inclinées 22a destinées à coopérer chacune avec la rampe inclinée 16a de chaque patin 13.

De même, l'écrou 23 comporte, à sa périphérie, quatre surfaces inclinées 23a destinées à coopérer chacune avec la rampe inclinée 16b de chaque patin 13.

Le nombre de surfaces inclinées 22a et 23a formées à la périphérie de chaque écrou 22 et 23 correspond au nombre de patins 13.

La vis 21 est pourvue à son extrémité supérieure d'un organe de manoeuvre 25 pour entraîner ladite vis en rotation.

Les patins 13 sont retenus par deux ressorts de rappel 26 maintenant chaque patin 13 au contact des écrous 22 et 23.

Selon une variante, la cage 11 peut être tubulaire et comporter une butée axiale rapportée pour la vis de manoeuvre 21.

Le positionnement final du couvercle 3 sur la cuve 1 est réalisé de la façon suivante.

Après avoir prépositionné le couvercle 3 sur la cuve 1 à l'aide des deux tiges de guidage 5, on met en place dans deux alésages 4 du couvercle 3, situés à 90° par rapport auxdites tiges 5, une broche d'alignement 10.

Les patins 13 de chaque broche sont en position rétractée comme représenté sur la Fig. 3.

Chaque broche 10 est introduite dans l'alésage correspondant 5 de telle manière que la touche 13d des patins 13 pénètre dans le chambrage supérieur du taraudage 2 et que la face d'appui de l'appendice 13c repose sur la surface supérieure de la cuve 1.

Ensuite, pour chaque broche 10, on tourne, par l'intermédiaire de l'organe de manoeuvre 25, la vis 21 ce qui entraîne en translation l'un vers l'autre les écrous 22 et 23 du fait des pas contraires des extrémités 21b et 21c de ladite vis et des filetages desdits écrous.

La translation des écrous 22 et 23 provoque, par l'intermédiaire des surfaces inclinées 22a et 23a desdits écrous et des pans inclinés 16a et 16b des patins 13, l'expansion radiale de ces patins 13.

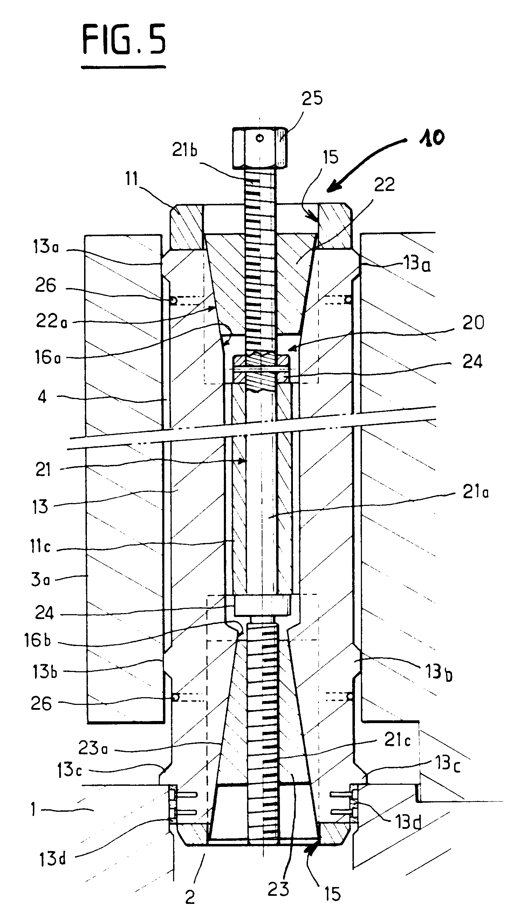

La touche 13d des patins 13 de chaque broche 10 prend appui dans le lamage du taraudage 2 de la cuve 1 et les touches 13a et 13b prennent appui dans l'alésage 4 du couvercle 3 (Fig. 5).

Le déplacement radial des patins 13 permet de centrer la broche correspondante dans le taraudage 2 de la cuve 1 fixe qui constitue une référence et simultanément de déplacer le couvercle 3 par rapport à la cuve afin de réaliser la coaxialité des alésages 4 par rapport aux taraudages 2 permettant ainsi de faciliter le vissage ultérieur des organes d'assemblage.

Le déplacement de l'ensemble constitué par le couvercle et ses équipements faisant environ 160T est possible avec des efforts très faibles en tournant manuellement les vis de manoeuvre des broches d'alignement grâce à un couple inférieur à 10m.daN. L'expansion des broches d'alignement permet donc de déplacer le couvercle sans difficulté dans les directions souhaitées aussi bien en centrage qu'en orientation.

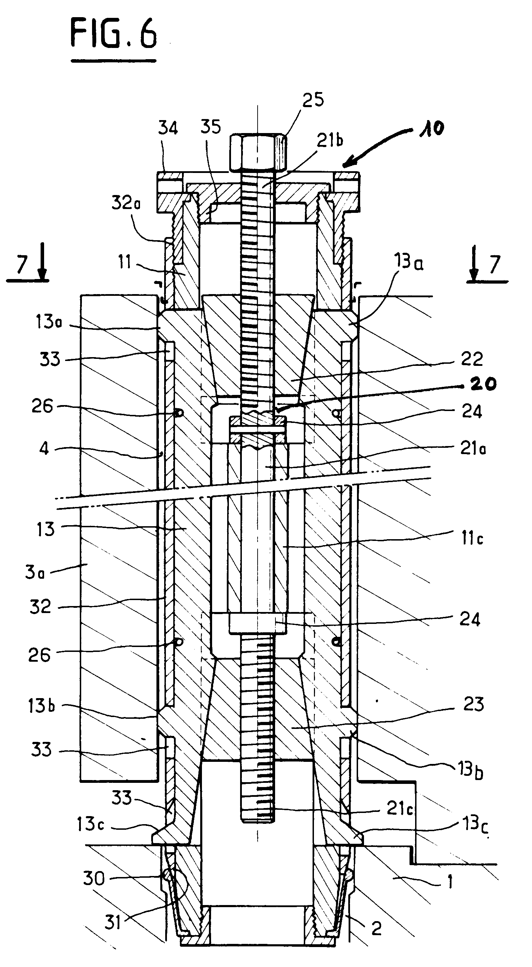

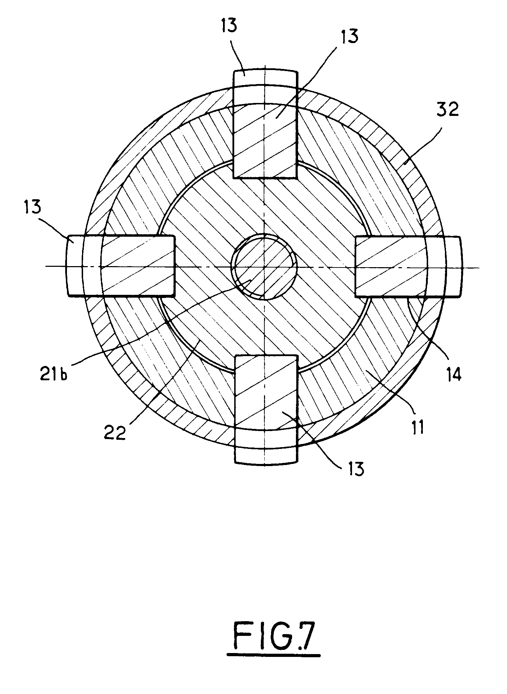

En se reportant aux Figs. 6 et 7, on va décrire un second mode de réalisation d'une broche d'alignement selon l'invention, les éléments identiques au précédent mode de réalisation étant désignés par les mêmes références.

Dans ce cas, chaque patin 13 comporte, sur sa face extérieure et du haut vers le bas, deux touches en saillie, respectivement 13a et 13b, distantes l'une de l'autre et destinées à coopérer avec l'alésage 4 du couvercle 3 et un appendice 13c muni d'une face d'appui sur la cuve 1, perpendiculaire à l'axe de la broche d'alignement.

La cage 11 est munie, à sa partie inférieure et sa périphérie, de touches ou d'une bague expansive 30 déplaçable radialement et destinée à coopérer avec le lamage du taraudage 2 de la cuve 1.

Cette bague expansive 30 est déplaçable radialement par un mécanisme indépendant de l'organe de commande 20.

Ce mécanisme est formé par une rampe conique 31 ménagée à l'extrémité inférieure d'une chemise 32 entourant la cage 11, cette chemise étant déplaçable longitudinalement parallèlement à l'axe de la broche.

La chemise 32 comporte, au niveau des touches 13a et 13b et de l'appendice 13c, des ouvertures 33 pour permettre le passage de ces touches et de cet appendice.

Ces ouvertures 33 sont suffisamment grandes pour permettre le déplacement de la chemise 32 et les touches 13a et 13b ainsi que l'appendice 13c s'opposent à la rotation de ladite chemise.

La chemise 32 est pourvue à son extrémité supérieure d'un taraudage 32a dans lequel est vissée une bague filetée 34 qui est en appui sur la cage 11.

La bague filetée 34 est maintenue par une bague d'arrêt 35 vissée dans la cage 11.

Chaque broche 10 est introduite dans l'alésage correspondant 5 de telle manière que la bague expansive 30 pénètre dans le lamage supérieur du taraudage 2 et que la face d'appui de l'appendice 13c repose sur la surface supérieure de la cuve 1.

Ensuite, pour chaque broche 10, on tourne la bague filetée 34 ce qui provoque le déplacement longitudinal de la chemise 32 et, par l'intermédiaire de la rampe conique 31, l'expansion de la bague 30.

Cette bague expansive 30 prend appui dans le chambrage du taraudage 2 assurant ainsi le centrage de la broche correspondante.

Pour effectuer le centrage du couvercle 3 sur la cuve 1, on agit de la même façon que pour le mode de réalisation précédent en tournant la vis de manoeuvre 21 de chaque broche 10 pour réaliser l'expansion des patins 13 qui déplacent le couvercle 3.

## Revendications

1. Broche d'alignement (10) de deux éléments (1, 3) comportant chacun au moins un orifice (2, 4) destiné à être positionné coaxialement l'un par rapport à l'autre, le premier élément (1) étant fixe et le second élément (3) étant déplaçable radialement, caractérisée en ce qu'elle comprend une cage (11) de diamètre inférieur au diamètre des orifices (2, 4) des deux éléments (1, 3) et destinée à être placée dans ces orifices (2, 4) et en ce que l a cage (11) comporte des moyens (13) d'expansion radiale pour le centrage de la broche (10) dans l'orifice (2) du premier élément fixe (1) constituant une référence et pour le déplacement du second élément (3) par rapport au premier élément (1), lesdits moyens d'expansion radialement étant formés par au moins deux patins (13) répartis symétriquement autour de l'axe de la cage (11) et logés chacun dans une ouverture (14) correspondante longitudinale ménagée dans cette cage (11), ces patins (13) étant déplaçables radialement simultanément par un organe de commande (20) disposé dans ladite cage (11).

2. Broche d'alignement selon la revendication 1, caractérisée en ce que la cage (11) a une forme générale cylindrique.

3. Broche d'alignement selon la revendication 1, caractérisée en ce que chaque ouverture (14) comporte une partie centrale en forme de "U" et chacune de ses extrémités un chambrage à fond plat.

4. Broche d'alignement selon la revendication 1, caractérisée en ce que chaque patin (13) comporte, sur sa face extérieure et du haut vers le bas, deux touches (13a, 13b) en saillie distantes l'une de l'autre et destinées à coopérer avec l'orifice (4) du second élément (3) déplaçable et un appendice (13c) muni d'une face d'appui sur le premier élément fixe (1), perpendiculaire à l'axe de ladite broche (10).

5. Broche d'alignement selon la revendication 1, caractérisée en ce que chaque patin (13) comporte, sur sa face extérieure et à son extrémité inférieure, une touche (13d) en saillie destinée à coopérer avec l'orifice (2) dudit premier élément fixe (1).

6. Broche d'alignement selon les revendications 4 et 5, caractérisée en ce que les touches (13a, 13b, 13d) possédent un profil extérieur courbe s'inscrivant dans un cercle.

7. Broche d'alignement selon la revendication 1, caractérisée en ce que chaque patin (13) comporte, sur sa face intérieure à et chaque extrémité, une rampe inclinée (16a, 16b) de même valeur en sens contraire l'une par rapport à l'autre.

8. Broche d'alignement selon l'une quelconque des revendications précédentes, caractérisée en ce que l'organe de commande (20) comprend, d'une part, une vis de manoeuvre (21) axiale, libre uniquement en rotation comportant une partie centrale (21a) de guidage en rotation et de maintien en translation dans la cage (11) et deux extrémités filetées (21b, 21c) dont les pas sont de même valeur mais contraires et, d'autre part, deux écrous (22, 23) montés chacun sur l'extrémité filetée correspondante de la vis (21) et destinés à déplacer radialement les les patins (13) au cours de la translation desdits écrous (22, 23) par rotation de la vis de manoeuvre (21).

9. Broche d'alignement selon la revendication 8, caractérisée en ce que les filetages des écrous (22, 23) sont à pas de même valeur mais contraires.

10. Broche d'alignement selon l'une quelconque des revendications précédentes, caractérisée en ce que chaque écrou (22, 23) comporte, à sa périphérie, au moins deux surfaces planes (22a, 23a) inclinées de même valeur et destinées à coopérer chacune avec la rampe inclinée (16a, 16b) du patin (13) correspondant.

11. Broche d'alignement selon l'une quelconque des revendications précédentes, caractérisée en ce que les patins (13) sont retenus par au moins un ressort de rappel (26) maintenant lesdits patins (13) au contact des écrous (22, 23).

12. Broche d'alignement selon l'une quelconque des revendications 1 à 4, caractérisée en ce que la cage (11) comporte, à son extrémité inférieure, une bague expansive (30) destinée à coopérer avec l'orifice (2) dudit premier élément fixe (1) et déplaçable radialement par un mécanisme (31) indépendant de l'organe de commande (20).

13. Broche d'alignement selon la revendication 12, caractérisée en ce que le mécanisme de déplacement de la bague expansive (30) est formé par une rampe conique (31) ménagée à la partie inférieure d'une chemise (32) entourant la cage de la broche et déplaçable longitudinalement parallèlement à l'axe de ladite broche.

14. Broche d'alignement selon la revendication 12, caractérisée en ce que la chemise (32) comporte des ouvertures (33) pour le passage des touches des patins (13), lesdites touches s'opposant à la rotation de ladite chemise (32).

15. Dispositif de centrage d'un couvercle (3) sur une cuve (1), notamment d'un réacteur nucléaire comportant chacun des orifices (2, 4) destinés à être positionnés coaxialement les uns par rapport aux autres, caractérisé en ce qu'il comprend au moins deux broches d'alignement (10) selon l'une quelconque des revendications précédentes.

## Claims

1. Pin (10) for aligning two elements (1, 3) each comprising at least one orifice (2, 4) intended to be positioned coaxially relative to one another, the first element (1) being fixed and the second element (3) being radially movable, characterised in that it comprises a sage (11) the diameter of which is legs than the diameter of the orifices (2, 4) of the two elements (1, 3), said cage being intended to be placed in these orifices (2, 4) and in that the cage (11) comprises radial expansion means (13) for centring the pin (10) in the orifice (2) of the first, fixed element (1) constituting a reference and for moving the second element (3) relative to the first element (1), said radial expansion means being formed by at least two shoes (13) distributed symmetrically about the axis of the cage (11) and each housed in a corresponding longitudinal opening (14) provided in this cage (11), these shoes (13) being radially movable simultaneously by means of a control member (20) arranged in said cage (11).

2. Alignment pin according to claim 1, characterised in that the cage (11) is generally cylindrical in shape.

3. Alignment pin according to claim 1, characterised in that each opening (14) has a U-shaped central portion and each of its ends has a flat-bottomed curve.

4. Alignment pin according to claim 1, characterised in that each shoe (13) comprises, on its outer surface and from top to bottom, two projecting studs (13a, 13b) spaced apart from each other and adapted to cooperate with the orifice (4) of the second, movable element (3) and an attachment (13c) provided with a surface abutting on the first, fixed element (1), perpendicular to the axis of said pin (10).

5. Alignment pin according to claim 1, characterised in that each shoe (13) comprises, on its outer surface and at its lower end, a projecting stud (13d) adapted to cooperate with the orifice (2) of said first, fixed element (1).

6. Alignment pin according to claims 4 and 5, characterised in that the studs (13a, 13b, 13d) have a curved outer profile inscribed in a circle.

7. Alignment pin according to claim 1, characterised in that each shoe (13) comprises, on its inner surface and at each end, an inclined ramp (16a, 16b), these ramps being of the same magnitude as each other but in opposite directions.

8. Alignment pin according to any of the preceding claims, characterised in that the control member (20) comprises, on the one hand, an axial operating screw (21) which is free only to rotate, comprising a central part (21a) for rotational guiding and maintaining in translation in the cage (11) and two threaded ends (21b, 21c) the thread pitches of which are of the same value but opposed to one another and, on the other hand, two nuts (22, 23) each mounted on the corresponding threaded end of the screw (21) and adapted to move the shoes (13) radially during the translational movement of said nuts (22, 23) by rotation of the operating screw (21).

9. Alignment pin according to claim 8, characterised in that the screw threads of the nuts (22, 23) have pitches of equal value but opposed to each other.

10. Alignment pin according to any of the preceding claims, characterised in that each nut (22, 23) comprises, at its periphery, at least two flat surfaces (22a, 23a) inclined by the same amount and each adapted to cooperate with the inclined ramp (16a, 16b) of the corresponding shoe (13).

11. Alignment pin according to any of the preceding claims, characterised in that the shoes (13) are held by at least one return spring (26) which keeps the shoes (13) in contact with the nuts (22, 23).

12. Alignment pin according to any one of claims 1 to 4, characterised in that the cage (11) comprises, at its lower end, an expansion ring (30) adapted to cooperate with the orifice (2) of said first, fixed element (1) and radially movable by a mechanism (31) which is independent of the control member (20).

13. Alignment pin according to claim 12, characterised in that the displacement mechanism for the expansion ring (30) is formed by a conical ramp (31) provided at the lower end of a sleeve (32) surrounding the cage of the pin and longitudinally movable parallel to the axis of said pin.

14. Alignment pin according to claim 12, characterised in that the sleeve (32) has openings (33) for the studs of the shoes (13) to pass through, said studs countering the rotation of said sleeve (32).

15. Device for centring a lid (3) on a tank (1), notably in a nuclear reactor, each comprising orifices (2, 4) adapted to be positioned coaxially relative to one another, characterised in that it comprises at least two alignment pins according to any one of the preceding claims.

## Patentansprüche

1. Ausrichtstange (10) für zwei Elemente (1, 3), die jeweils mindestens eine Öffnung (2, 4) aufweisen, die dazu gedacht ist, koaxial zur jeweils anderen angeordnet zu werden, wobei das erste Element (1) feststehend ist und das zweite Element (3) in radialer Richtung verschiebbar ist,
dadurch gekennzeichnet, daß sie aus einem Käfig (11) besteht, dessen Durchmesser kleiner ist als der Durchmesser der Öffnungen (2, 4) der beiden Elemente (1, 3), und der dazu gedacht ist, in diesen Öffnungen (2, 4) angeordnet zu werden, und daß der Käfig (11) Mittel (13) zur Ausdehnung in radialer Richtung für das Zentrieren der Stange (10) in der Öffnung (2) des ersten, festen Elements (1), das einen Bezugspunkt darstellt, und für das verschieben des zweiten Elements (3) gegenüber dem ersten Element (1) aufweist, wobei die genannten Mittel zur Ausdehnung in radialer Richtung von mindestens zwei Gleitstücken (13) gebildet werden, die symmetrisch um die Achse des Käfigs (11) angeordnet sind und jeweils in einer entsprechenden Längsöffnung 14 sitzen, die in diesem Käfig (11) ausgeführt ist, wobei diese Gleitstücke (13) durch ein Betätigungsorgan (20), das in dem genannten Käfig (11) angeordnet ist, zugleich in radialer Richtung verschiebbar sind.

2. Ausrichtstange nach Anspruch 1,
dadurch gekennzeichnet, daß der Käfig (11) eine allgemein zylindrische Form besitzt.

3. Ausrichtstange nach Anspruch 1,
dadurch gekennzeichnet, daß jede Öffnung (14) einen U-förmigen zentralen Teil und jedes ihrer Enden eine Einsenkung mit flachem Boden aufweist.

4. Ausrichtstange nach Anspruch 1,
dadurch gekennzeichnet, daß jedes Gleitstück (13) an seiner Außenseite und von oben nach unten zwei hervorstehende Anlageflächen (13a, 13b), die sich in Abstand voneinander befinden und dazu vorgesehen sind, mit der Öffnung (14) des zweiten, verschiebbaren Elements (3) zusammenzuwirken, sowie einen Ansatz (13c), der mit einer senkrecht zur Achse der genannten Stange (10) liegenden Fläche zur Auflage auf dem ersten, feststehenden Element (1) versehen ist, aufweist.

5. Ausrichtstange nach Anspruch 1,
dadurch gekennzeichnet, daß jedes Gleitstück (13) an seiner Außenseite und an seinem unteren Ende eine hervorstehende Anlagefläche (13d) aufweist, die dazu vorgesehen sind, mit der Öffnung (14) des genannten ersten, feststehenden Elements (1) zusammenzuwirken.

6. Ausrichtstange nach den Ansprüchen 4 und 5,
dadurch gekennzeichnet, daß die Anlageflächen (13a, 13b, 13d) ein gebogenes Außenprofil aufweisen, das in einen Kreis einbeschrieben ist.

7. Ausrichtstange nach Anspruch 1,
dadurch gekennzeichnet, daß jedes Gleitstück (13) an seiner Innenseite und an jedem Ende eine Abschrägung (16a, 16b) aufweist, die in entgegengesetzten Richtungen mit gleichem Wert geneigt sind.

8. Ausrichtstange nach einem der vorherigen Ansprüche,
dadurch gekennzeichnet, daß das Betätigungsorgan (20) einerseits eine in Achsrichtung verlaufende Betätigungsspindel (21) umfaßt, die nur drehfrei ist und einen zentralen Teil (21a) zur Führung in Drehrichtung und zum Festhalten in Vorschubrichtung in dem Käfig (11) sowie zwei Gewindeenden (21b, 21c), deren Steigungen den gleichen Wert, aber entgegengesetzte Richtungen haben, aufweist, und andererseits zwei Muttern (22, 23) umfaßt, die jeweils auf dem entsprechenden Gewindeende der Spindel (21) sitzen und dazu vorgesehen sind, die Gleitstücke (13) während der Vorschubbewegung der genannten Muttern (22, 23) durch Drehung der Betätigungsspindel (21) in radialer Richtung zu verschieben.

9. Ausrichtstange nach Anspruch 8,
dadurch gekennzeichnet, daß die Gewinde der Muttern (22, 23) Steigungen mit dem gleichen Wert, aber in entgegengesetzten Richtungen haben.

10. Ausrichtstange nach einem der vorherigen Ansprüche,
dadurch gekennzeichnet, daß jede Mutter (22, 23) an ihrem Umfang mindestens zwei ebene Flächen (22a, 23a) aufweist, die mit gleichem wert geneigt sind und dazu vorgesehen sind, jeweils mit der geneigten Abschrägung (16a, 16b) des entsprechenden Gleitstücks (13) zusammenzuwirken.

11. Ausrichtstange nach einem der vorherigen Ansprüche,
dadurch gekennzeichnet, daß die Gleitstücke (13) durch mindestens eine Rückstellfeder (26) festgehalten werden, die die genannten Gleitstücke (13) in Kontakt mit den Muttern (22, 23) halten

12. Ausrichtstange nach einem der Artsprüche 1 bis 4,
dadurch gekennzeichnet, daß der Käfig (11) an seinem unteren Ende einen Expansionsring (30) aufweist, der dazu vorgesehen ist, mit der Öffnung (2) des genannten ersten, feststehenden Elements (1) zusammenzuwirken, und in radialer Richtung durch einen Mechanismus (31) verschiebbar ist, der unabhängig von dem Betätigungsorgan (20) ist.

13. Ausrichtstange nach Anspruch 12,
dadurch gekennzeichnet, daß der Verschiebemechanismus des Expansionsrings (30) von einer konischen Abschrägung (31) gebildet wird, die am unteren Teil einer Ummantelung (32) ausgeführt ist, welche den Käfig der Stange umgibt, und in Längsrichtung parallel zur Achse der genannten Stange verschiebbar ist.

14. Ausrichtstange nach Anspruch 12,
dadurch gekennzeichnet, daß die Ummantelung (32) Öffnungen (33) für den Durchlaß der Anlageflächen der Gleitstücke (13) aufweist, wobei die genannten Anlageflächen die Drehbewegung der genannten Ummantelung (32) verhindern.

15. Vorrichtung zum Zentrieren eines Deckels (3) auf einem Behälter (1), insbesondere bei einem Kernreaktor, welche jeweils Öffnungen (2, 4) aufweisen, die koaxial zueinander angeordnet werden sollen,
dadurch gekennzeichnet, daß sie mindestens eine Ausrichtstange (10) nach einem der vorherigen Ansprüche umfaßt.
